# NEW EUROPEAN PATENT SPECIFICATION

(11) **EP 2 719 510 B2**
(45) Date of publication and mention of the opposition decision: **09.10.2024**
(45) Mention of the grant of the patent: 08.05.2019
(21) Application number: 12188178.3
(22) Date of filing: 11.10.2012
(51) Int. Cl.: B28C 5/42, B60L 1/00, B60L 3/00, B60P 3/16

(54) **Method for operating a mixer vehicle.**
Verfahren zum Betrieb eines Mischerfahrzeugs
Procédé pour faire fonctionner un véhicule mélangeur

(43) Date of publication of application: 16.04.2014
(73) Proprietor: Mulder Europe B.V., 3313 LA Dordrecht (NL)
(72) Inventor: van der Wel, Jacobus Antonius Maria, 3313 LA Dordrecht (NL); van Aalst, Gerbrand August Wijnand, 3313 LA Dordrecht (NL)
(74) Representative: V.O.

(56) References cited:
- WO-A1-2013/111002
- WO-A1-2013/190354
- CN-A- 102 476 402
- CN-U- 201 604 566
- DE-A1- 1 683 817
- DE-A1- 3 026 711
- JP-A- 2003 226 192
- JP-A- 2011 151 965
- JP-A- H10 309 971
- US-A1- 2011 241 420

## Description

The invention relates to a method for operating a mixer truck having a main engine for driving said truck and having a mixer drum.

Mixer vehicles, such as but not limited to mixer trucks are often used for transporting mixable and/or mixed loads, such as but not limited to concrete or mortar. Normally, the mixer drum is a rotatable drum of which an inside can be provided with a spiral blade. Said spiral blade is arranged to push a load, for instance concrete, further into the drum when the drum rotates in a first rotational direction, and to force the load partly or completely out of the drum when the drum rotates in an opposite, second rotational direction. Normally, between loading and unloading, for instance during transport of the load from a loading site to an unloading site, the drum is rotating, preferably in the first rotational direction. For example, between loading and unloading the drum may rotate at least part of the time in order to mix yet non-mixed or not enough mixed load and/or in order to agitate the load.

Generally, the rotation of the mixer drum is around a longitudinal axis of the drum. Usually, said rotation is powered by a main engine of the mixer truck, an auxiliary (combustion) engine placed on a trailer or semi-trailer, or a main engine of a tractor unit connected to a mixer trailer or semi-trailer, for instance via a power take-off (PTO) connected to the main engine. For example, the PTO may drive a variable type hydraulic pump which can drive a hydraulic motor, wherein the hydraulic motor can be connected to the mixer drum via a reduction box.

Typically, a concrete mixer vehicle is loaded at a concrete plant or so-called batching plant and is subsequently driven to an unloading site such as a construction site. At the unloading site, the concrete mixer vehicle can be unloaded. Often, between loading and unloading, the vehicle is at a stop, for instance when the vehicle is waiting for a traffic light or for its turn to get unloaded at the construction site. Normally, when the vehicle is at a stop, the main engine of the truck or tractor unit keeps running to provide power to the PTO in order to enable rotation of the mixer drum. It is noted that said main engine can make lots of noise, which can be highly unwanted, especially at inhabited areas. Besides, the main engine, normally a combustion engine, emits exhaust gasses during use which are not only unhealthy but may also be subjected to regulation, legislation and/or standardisation such as the EURO 5 norm or the future EURO 6 norm.

It is noted that the disadvantage of the main engine making noise and emitting exhaust gasses does not only occur when the vehicle is waiting. Actually, during loading and unloading, typically the main engine is running at more revolutions per minute than during waiting and/or during transport, because the mixer drum needs more power to push the load in an inward or outward direction, respectively. This can be disadvantageous, for instance because the loading of concrete often occurs in a substantially closed space where the exhaust gasses can hardly get away and/or because of noise pollution due to the main engine running, especially when running at high speed, which lack of sufficient communication even could cause dangerous situations. Moreover, the noise can be hazardous to people.

Further, when a mixer drum is being rotated by the main engine of the mixer truck using a PTO, said main engine cannot be switched off during a stop of the truck. A disadvantage hereof is that, when using the PTO for rotating the mixer drum, the truck cannot use a so-called start-stop system that can automatically shut down and restart the main engine in order to reduce fuel consumption and emissions.

In the past, concrete mixer vehicles having a main engine and an electric motor for driving a mixer drum connected to a battery pack have been proposed. However, in order to use the battery pack to provide enough power for loading and/or unloading the mixer drum, such proposed vehicles need extremely bulky and heavy battery packs which battery packs also are relatively expensive. Further, mixer vehicles have been proposed wherein the main engine of the vehicle can be used temporarily to rotate the mixer drum, for instance during loading or unloading, in stead of the battery pack which for example is used between loading and unloading. However, use of the main engine, especially when it is running at relatively high revolutions, is very disadvantageous, for instance for reasons described above such as noise and emissions.

Japanese patent publication JP 2003 226 192 describes a truck mixer comprising a drum driven by an electric motor via a reduction gear. The truck mixer is provided with an electric generator driven by a main engine of the truck mixer. The truck mixer is further provided with a battery.

Chinese utility model publication CN 201 604 566 describes a concrete mixing truck having a drum driven by an electric motor fed by a battery. Further, a battery charging plug is described for connection to an external power supply in order to charge the battery.

Chinese patent publication CN 102 476 402 describes a mortar truck and a mixing control system for the same. The truck comprises a battery pack for feeding a mixing motor of the mortar mixer.

American patent publication US 2011/241 420 describes a power supply device for a unit, such as a refrigerator unit, a concrete mixer, a shredder, etc. The power supply device comprises an electro-hybrid drive system arranged in a vehicle such as a tractor. The electro-hybrid drive system comprises an electric motor, which can be fed by a battery, and an internal combustion engine for driving purposes and also for charging the battery, which battery may feed said unit via a supply unit of the power supply device.

Japanese patent publication JP 2011 151 965 describes a garbage truck with a control means including an inverter device, which control means can be fed by a power storage means which can be charged by means of a generator connected to a vehicle engine of the truck. The truck is arranged such that one can manually carry out a switchover between an internal power supply by the power storage means and an external power supply.

An object of the present disclosure is to provide an alternative method for operating a mixer truck. It is an object of the present invention to alleviate or solve at least one of the disadvantages above. In particular, the invention aims at providing a mixer vehicle, wherein at least one of the disadvantages mentioned above is counteracted or advantages there above are obtained. More in particular, the invention aims at providing a method according to claim 1, wherein exhaust emissions and/or noises are counteracted during loading of the vehicle's mixer drum. In embodiments, the invention aims at providing a mixer vehicle which enables the use of a start-stop system.

In an aspect of the disclosure, the present disclosure provides for a drive train for driving a mixer drum of a mixer vehicle, comprising an electric motor and a mains connector for connecting the electric motor to a power mains, and wherein the drive train further comprises at least one of a generator for generating electric power, and a battery pack.

In a further aspect of the disclosure, the present disclosure provides for a mixer vehicle comprising a mixer drum and a drive train for driving the mixer drum, wherein the drive train comprises an electric motor and a mains connector for connecting the electric motor to a power mains, and wherein the drive train further comprises at least one of a generator for generating electric power; and a battery pack.

By providing the mains connector, the electric motor can be connected to a power mains, for instance when the mixer vehicle is at rest during loading, waiting at an unloading site such as a construction site and/or unloading, while the electric motor for rotating the mixer drum can be driven by the power from the mains, which is fed to the electric motor substantially directly, that is without being stored in a battery pack first or through a generator. The electric motor comprised in the drive train for driving the mixer drum can thus be provided with power from the power mains, at least temporarily. Therefore, for instance during loading, during waiting at an unloading site and/or during unloading, the main engine may be shut off. As a result, the mixer vehicle can thus reduce exhaust emissions and/or noises, while the drum can still be rotated, even at relatively high revolutions, such as for instance at about 10-15 revolutions per minute.

By additionally providing at least one of a generator for generating electric power; and a battery pack, the electric motor for driving the mixer drum can be powered by the generator and/or the battery pack. Consequently, the mixer drum can be rotated by the electric motor even when the mains connector is not connected to a power mains, such as for instance during transport from a concrete batching plant to an unloading site, independent from the main engine.

Advantageous embodiments of the invention are described below and in the appended claims.

By way of non-limiting examples only, embodiments of the present invention will now be described with reference to the accompanying figures in which:
Figure 1 shows a schematic view of an embodiment of a mixer vehicle according to an aspect of the invention;
Figure 2 shows a schematic view of a drive train of the vehicle of Figure 1; and
Figure 3 shows a schematic view of a control unit according to an aspect of the invention.

The embodiments disclosed herein are shown as examples only and should by no means be understood as limiting the scope of the claimed invention in any way. In this description the same or similar elements have the same or similar reference signs.

In general terms, the invention can be understood as being at least directed to a mixer truck of which an electric motor for driving its mixer drum can be connected to a power mains during loading, wherein said electric motor for driving the mixer drum is not used for moving the mixer truck. Actually, moving the mixer truck may be executed using a separate main engine, such as by a main engine of the mixer truck. In this description a mixer truck is to be understood at least as a vehicle for mixing or agitating content in a mixer drum and transporting said content from a loading position to an unloading position. A mains or power mains has to be understood as a connection or connection point or element of a power grid such as but not necessarily limited to a public or private power grid connected to an electric power plant, providing for example 3 phase electric power and/or power of for instance 220 or 380-480 Volts or any such normally used voltage on a power grid.

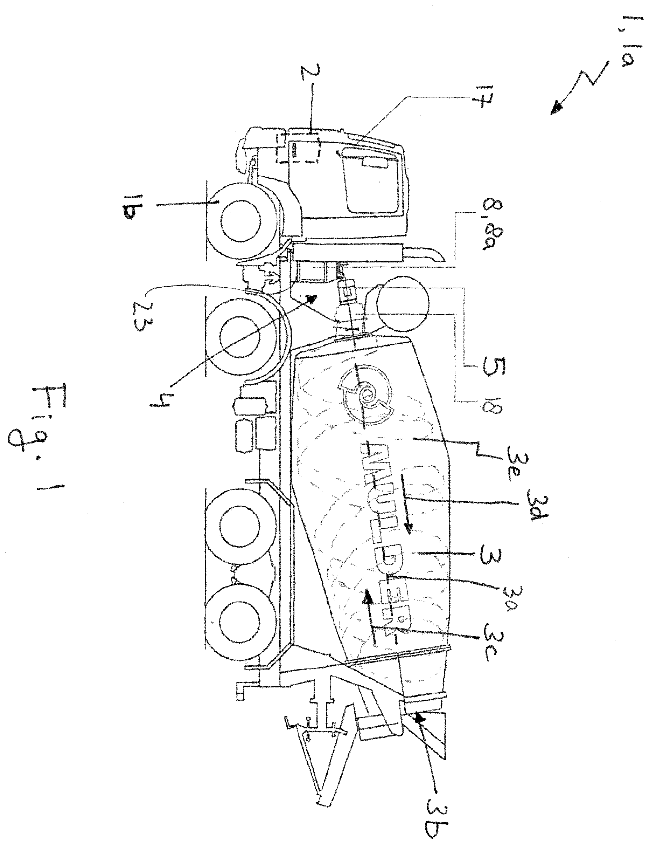

Figure 1 shows a schematic view of an embodiment of a mixer vehicle 1. Here, the mixer vehicle 1 is a mixer truck 1a having a main engine 2 for moving said truck 1a, for example by driving wheels 1b of the truck 1a. It is noted that the main engine 2 of the mixer vehicle 1 can for example be a combustion engine.

The mixer vehicle 1 of Figure 1 comprises a mixer drum 3 and a drive train 4 for driving said mixer drum 3. Preferably, the mixer drum 3 is drivable around a longitudinal axis 3a of said drum 3. The mixer drum 3 can comprise an opening 3b for loading and unloading the mixer drum 3. Further, the mixer drum 3 may be provided with a means for moving load in an inward direction 3c and/or an outward direction 3d. Here, for instance, an inside of the mixer drum 3 is provided with a spiral blade 3e fixed to said inside and arranged for pushing a load in the inward direction 3c when the mixer drum 3 rotates in a first rotational direction, for pushing the load in the outward direction 3d when the mixer drum 3 rotates in a second rotational direction opposite to the first rotational direction, and/or for mixing a load when the drum 3 rotates at a relatively low speed such as but not limited to a speed of about 1-3 or about 1.5-2 revolutions per minute, preferably in the first rotational direction. The mixer drum 3 may be conventional.

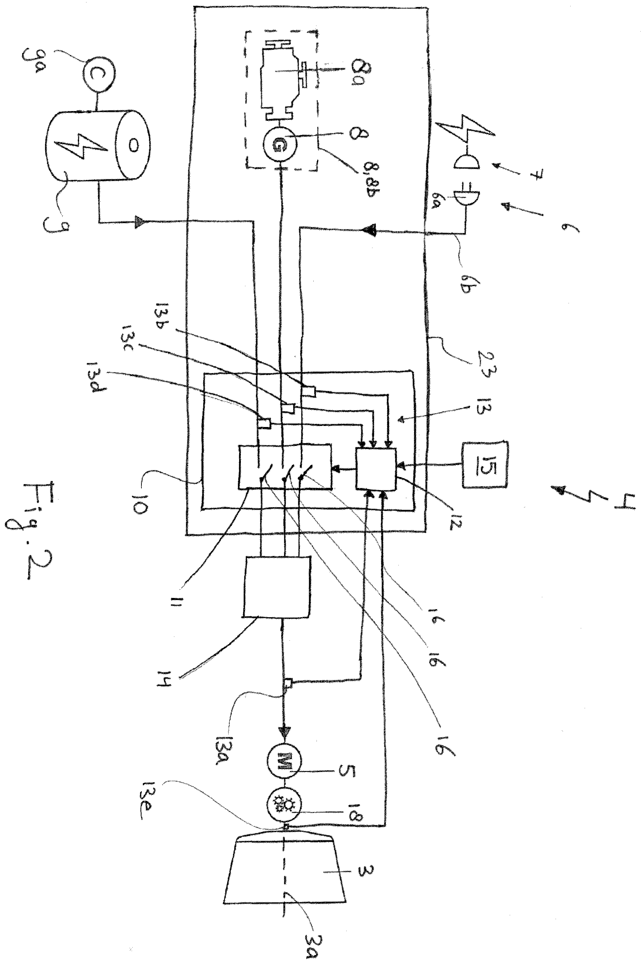

Figure 2 shows a schematic view of the drive train 4 of the vehicle 1 shown in Figure 1. The drive train 4 comprises an electric motor 5 and a mains connector 6 for connecting the electric motor 5 to a power mains 7. The electric motor 5 is for driving the mixer drum 3, preferably around its longitudinal axis 3a. Thereto, the electric motor 5, for example by means of an outgoing axis of said motor 5, may be connected to the mixer drum 3, for instance via a reduction box 18. The mains connector 6 may for instance comprise or consist of a plug 6a or a power cable 6b and a thereto connected plug 6a. Preferably, the power cable 6b is a flexible power cable. Here, the drive train 4 further comprises a generator 8 for generating electric power and a battery pack 9. It is noted however, that in embodiments the drive train 4 does not need to, but nevertheless may, comprise both a generator 8 and a battery pack 9. This is, the drive train 4 can comprise at least one of a generator 8 for generating electric power; and a battery pack 9. For example, the drive train 4 can comprise a battery pack 9, but no generator 8. Alternatively, the drive train 4 can for instance lack a battery pack 9, but can comprise a generator 8.

The generator 8 or so called electric generator 8 may comprise and/or may be connected to a generator engine 8a. The generator engine 8a can be a piston engine, such as but not limited to a combustion engine for example running on diesel, petrol and/or gas. Alternatively or additionally, the generator 8 can for instance comprise at least one gas turbine and/or other means for providing the generator 8 with a source of mechanical energy 8a. In embodiments, the generator 8 is an engine-generator 8b comprising a generator engine 8a.

By providing the generator engine 8a, the generator 8 can be provided with a source of energy 8a, even when the main engine 2 for driving the truck 1a or tractor unit is shut off. Since the main engine 2 is not needed for driving the mixer drum 3 during loading, waiting and/or unloading said mixer drum 3, exhaust emissions and/or noises can be reduced significantly. Besides, due to that the generator engine 8a can be a relatively small, silent and/or clean engine 8a compared to the main engine 2, exhaust emissions and/or noises can be reduced significantly during loading, waiting and/or unloading in comparison to using the main engine 2 for driving the mixer drum 3.

By providing the battery pack 9 for providing electric power and by arranging the drive train 4 to provide the electric power from the battery pack 9 to the electric motor 5, the mixer drum 3 can be rotated without running the main engine 2. Consequently, noise and/or emissions can be counteracted.

An advantage of providing both the electric generator 8 and the battery pack 9 is for example that the battery pack 9 can be used when only a relatively low level of emissions and/or noise level is wanted or permitted, for instance when driving down town. However, the capacity of the battery pack 9 can be limited, because the generator 8 may in embodiments function as a backup power source and/or as an alternative power source, which may for instance be used to save the battery pack, such as for example when driving in the country site. When using the generator 8 as power source, the battery pack 9 may serve as a backup power source, for instance because the generator engine 8a can run out of fuel. It is noted that a backup power source can be very advantageous, for instance because it is highly unwanted that concrete sets inside a mixer drum 3 due to a not rotating mixer drum.

In embodiments, the vehicle 1 is provided with charger 9a for charging the battery pack 9. The charger 9a may for instance be connected with or connectable to the electric generator 8, 8b. Alternatively or additionally, the charger 9a may be connected with or connectable to the main engine 2 of the truck 1a or tractor unit, for instance via a board network of said truck 1a or tractor unit. Further, alternatively or additionally, the charger 9a may be connectable to a power mains, for instance by means of the mains connector 6 and/or by means of a separate, second mains connector. In an embodiment the charger can be connected selectively to one or two or three of these alternative sources, so as to allow an appropriate selection, manually and/or automatically. It is noted that, alternatively or additionally, other means may be used to provide the charger 9a with power. For example, the mixer vehicle 1 may be provided with solar panels and/or a separate, not shown, electric generator and/or the charger 9a may be connected to and/or connectable with a PTO of the vehicle.

Alternatively or additionally, the battery pack 9 may be replaceable. An empty or low battery pack 9 may then be replaced by a full or at least fuller battery pack.

In the shown embodiment, the drive train 4 comprises a switch system 11 for connecting the electric motor 5 selectively with the mains connector 6, the generator 8 and/or the battery pack 9. In embodiments, the switch system 11 can thereto comprise one or more switches 16 for making or ending one or more respective connections. By providing the switch system 11, the source of the power supply to the electric motor 5 can be selected. For instance, the electric motor 5 can be provided selectively with power from the battery pack 9 and/or the electric generator 8, for instance while the mixer vehicle 1 is on the road, and the electric motor 5 can be provided with power from the mains connector 6, for instance when said mains connector 6 is connected to the mains 7, for instance during loading, waiting at a delivery site and/or unloading.

In embodiments, the switch system 11 allows connecting the electric motor 5 selectively with at least two, preferably all three, of the mains connector 6, the generator 8 and the battery pack 9 at the same time. By connecting said motor 5 to at least two or at least three sources of electric energy 6, 8, 9 at the same time, the electric motor 5 can for instance be provided with more power. When one source of electric energy 6, 8, 9, for instance the mains connector 6 connected to the mains, cannot supply enough electric power, another one of the sources of electric energy 6, 8, 9, such as the battery pack 9 and/or the generator 8, can supply additional electric power. This may be advantageous, for example when during loading or unloading the mixer drum 3 is rotated with a relatively high rotational speed such as but not limited to a speed of about 8-16, about 10-15 or about 12 revolutions per minute and/or during speeding up said drum 3 and/or prior to unloading, when the speed is already sped up to a speed of for instance about 4, 5, 6 or 7 revolutions per minute.

In the shown embodiment, the drive train 4 comprises a controller 12, for instance a programmable logic controller. The controller12 is at least arranged for at least partly controlling the switch system 11. For example, the controller 12 can provide current or voltage to the switch system 11 and/or to at least one of the switches 16, which switch 16 may be a relay such as for instance a relay operable by an electromagnet.

Here, the drive train 4 comprises a sensor system 13 which may be arranged for sensing a power need of the electric motor 5 and/or a power consumption of said motor 5. Alternatively or additionally, the sensor system 13 can be arranged for sensing availability of power via the mains connector 6, from the generator 8 and/or from the battery pack 9. The sensor system 13 can comprise one or more sensors 13a-13e or so-called detectors 13a-13e for sensing a power need or power consumption of the electric motor 5. For instance, said sensor system 13 can comprise a motor sensor 13a for sensing a power need of the electric motor 5. The motor sensor 13a is here provided at a power supply cable for supplying power to the electric motor 5 and is arranged for detecting the power supply to the motor by sensing an amperage, but alternatively or additionally a motor sensor 13a may be placed at another position. For example, an alternative motor sensor 13a may be located at the motor, and it may for instance be arranged for sensing the power consumption of the motor and/or its rotation speed. Additionally or alternatively, the sensor system 13 can comprise one or more sensors 13b, 13c, 13d for sensing availability of power via the mains connector 6, from the generator 8 and/or from the battery pack 9. Alternatively or additionally, other sensors or detectors 13 may be provided. For example, a sensor may be provided for sensing the fuel level of a not shown fuel tank connected to the generator engine 8a. As another example, a sensor 13e may be provided for sensing the rotation speed and or direction of rotation of the mixer drum 3 and/or a drive shaft for driving said drum 3.

Here, the sensor system 13 is connected to the controller 12 and said controller 12 is arranged for setting the switch system 11 at least partly based on said detected power need or consumption and/or said detected availability of power. The switch system 11 may for instance be arranged to connect the electric motor 5 to the mains connector 6, for example when the electric motor 5 needs a relatively high power supply, such as for example during loading and/or unloading. Further, the switch system 11 may be arranged for additionally connecting the electric motor 5 to an additional electric power source 8, 9, for example when is sensed that the mains connector 6 cannot supply enough power in order to meet a predefined minimum power threshold for a certain task such as loading and/or unloading and/or in order to meet an actual power need, such as for instance is sensed by the motor sensor 13a. Alternatively or additionally, the switch system 11 may be arranged to connect the electric motor 5 to the battery pack 9 and/or to the generator 8, for example when it is sensed that the mains connector 6 is not connected to the mains. Preferably, the switch system 11 and/or a respective switch 16 is arranged to disconnect one or more of the sources of electric energy 6, 8, 9, for example when it is sensed that the electric power supply of a respective source of electric energy 6, 8, 9 does not meet a predefined minimum power supply level. As a result, it may for instance be counteracted that the battery pack 9 is further drained while said battery pack 9 can already not longer substantially supply the electric motor 5 of enough power.

In the shown embodiment, the drive train 4 further comprises an electric circuit 14 for driving the electric motor 5 on direct current and/or alternating current power sources 6, 8, 9. For instance, the electric circuit 14 may be arranged to adapt the power supply from direct current to alternating current, such as but not limited to two-phase or three-phase electric power, and/or from alternating current to direct current. Additionally or alternatively, the electric circuit 14 may be arranged for combining at least a part of the power supplies of two or more power sources 6, 8, 9, preferably, if so desired, after the electric circuit 14 has adapted the current supplied by the respective power source to power of a respective current type needed for the electric motor 5. For example, the electric circuit 14 may be arranged to adapt the direct current and/or the two-phase electric power into three-phase electric power, for instance when the electric motor is running on three-phase electric power, and the power mains connector 6 supplies two-phase electric power and the battery pack 9 supplies direct current power. In embodiments, the electric circuit 14 can comprise a frequency changer or a so-called frequency converter.

In embodiments, the drive train 4 can be provided with an input device 15 for inputting data concerning an intended drive state of the mixer drum 3. The input device 15 may for instance be arranged for allowing an operator of the mixer vehicle 1 to input data concerning an intended drive state of the mixer drum 3, such as but not limited to a multiple position rotary selector knob. The intended drive state can for instance be a loading state, an unloading state, a mixing state wherein yet unmixed and/or not fully mixed load is mixed, an agitating state or an off state wherein the mixer drum is at a stop. Preferably, the input device 15 is connected to the controller 12. Alternatively or additionally, the input device 15 may be connected to the electric motor 5. The controller 12 may be arranged for controlling the switch system 11 at least partly based on inputted data.

By inputting the intended drive state, the electric motor 5 may be set to an intended driving condition and/or the switch system 11 can be brought into a corresponding switch state. As mentioned above, the operator, such as but not limited to a driver of the mixer vehicle, may input the data concerning an intended drive state into the input device 15. For example, the operator may input that loading or unloading of the mixer drum 3 should start or stop right now. Thereto, the input device 15 may for instance comprise one or more stop and start buttons or a stop/start button. Alternatively or additionally, the input data can for instance comprise a starting time when a certain drive state should start and/or an ending when it should stop and/or a time interval for how long a certain drive state should continue. Thereto, the input device 15 may for example comprise an internal clock, a timer and/or a counter and corresponding input means. Besides, the input data may comprise conditions for starting, continuing, pausing, restarting and/or ending a certain drive state. Such conditions may comprise for instance a maximum or/and a minimum level of power consumption of the electric motor, for instance a power consumption level corresponding to driving the mixer drum at a certain rotational speed when said drum holds a certain amount of load.

Alternatively or additionally, the input device 15 or an additional input device of the drive train 4 may be arranged for inputting data concerning preferable power source use. As a result, an operator can for instance input data about which power source or power sources should be given priority by the controller 12.

Further, the controller 12 can be arranged for setting the switch system 11 at least partly based on inputted data. The controller 12 may for instance comprise a computer or microprocessor for controlling the switch system 11, for instance at least partly based on inputted data. For example, when the inputted data for instance corresponds to a loading or an unloading state, generally corresponding to a relative high power consumption of the electric motor 5, the controller 12 may for instance drive the switch system 11 to connect the mains connector 6 to the electric motor 5.

It is noted that the input device 15, one or more of a multiple number of input devices 15 and/or input means may be arranged for enabling an operator to select a limited number of predefined settings. Such limited number of predefined steps may for instance include one or more of the intended drive states which may include a loading state, an unloading state, a mixing state wherein yet unmixed and/or not fully mixed load is mixed, an agitating state or an off state wherein the mixer drum is at a stop. Additionally or alternatively, the input device 15 may be arranged for enabling the operator to set the rotational speed and/or direction of the mixing drum 3 and/or the running speed of the electric motor 5 in advance of a start of a certain drive state and/or to adjust it during the drive state. For example, the speed of the mixing drum 3 and/or the electric motor 5 may be continuously adjustable or may be inputted in certain predefined increments only. Additionally or alternatively, the input device 15 and/or the controller 12 may be arranged for enabling the operator to select and/or deselect one or multiple of the power sources 6, 8, 9. The operator can then indicate use of which of the power sources 6, 8, 9 is desired at a certain moment. For instance, the operator may choose to save the battery pack 9 and/or the fuel supply for the generator engine 8a and/or may choose not to use the power mains 7 any longer, for example because it is intended to disconnect the mains connector 6 in order to prepare for removing the mixer vehicle 1.

Alternatively or additionally, the input device 15 may be arranged for selecting a predefined drive state of the mixer drum 3, such as but not limited to one or more of the loading state, unloading state, mixing state, agitating state and the off state.

In embodiments, the input device 15 is arranged for selecting one of multiple power source presets. The presets may include a preset for only using the power main 7, a preset for only using the generator 8, a preset for only using the battery pack 9, a preset for using the battery pack and the generator, a preset for using the generator and the power mains 7, a preset for using the power mains and the battery pack and/or a preset for using the power mains 7, the generator 8 and the battery pack 9. In embodiments, the controller 12 may be arranged for selecting one or more of the power sources preselected by the operator. Alternatively or additionally, the controller 12 may be arranged for overruling the selection of the operator and can select a power source not included in the respective preset selected by the operator.

Preferably, the input device 15 is arranged for receiving at least manual input into the device 15. The input device 15 may for instance comprise one or more suitable input means such as but not limited to one or more selector switches, rotary controls, buttons and/or touch screens. It is noted that the input device 15 may for example be provided in or at a cabin 17 of the truck 1a of the vehicle 1. Alternatively or additionally, the input device 15 may be provided at least partly at another place, for instance, at a housing 23 accommodating at least parts of the drive train 4, or at the back of the mixer vehicle 1, preferably close to a rear discharger. The input device 15 may comprise a smartphone including at least one respective application which can be connected wirelessly with a receiving part of the input device 15. It is noted that, in embodiments, the drive train 4 may be provided with more than one input device 15.

This disclosure further relates to a drive train 4 for driving a mixer drum 3 of a mixer vehicle 1, such as for example but not limited to the drive train 4 of Fig. 2 comprised in the vehicle 1 of Fig. 1. The drive train 4 comprises an electric motor 5 and a mains connector 6 for connecting the electric motor 5 to a power mains 7. Further, the drive train 4 comprises at least one of a generator 8 for generating electric power and a battery pack 9 for supplying electric power. Additionally, the drive train 4 may be provided with one or more of the features described above in the context of the drive train 4 which is part of the mixer vehicle 1.

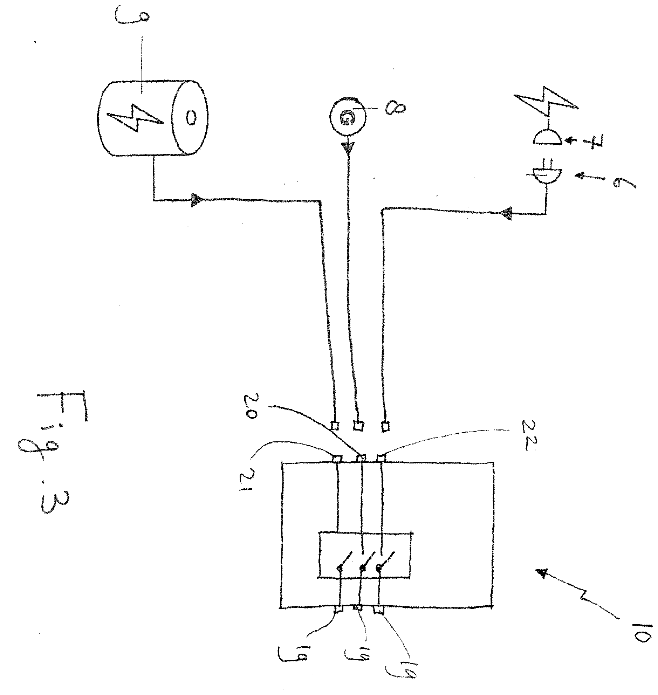

Figure 3 shows a schematic view of a control unit 10. The control unit 10 is for a drive train, such as but not limited to one or more of the above described drive trains, for driving a mixer drum of a mixer vehicle. In embodiments, the control unit 10 is arranged for coupling to a mains connector 6 of the drive train. For example, the control unit 10 can comprise a coupler 22 coupleable to the mains connector 6 and/or a coupling, such as a fixed coupling to the mains connector 6 which coupling for instance cannot be uncoupled. Further, the control unit 10 can be arranged to an electric motor of the drive train. Thereto, the control unit 10 can comprise one or multiple couplers 19 coupleable to the electric motor or one or multiple couplings to said electric motor. It is noted that the control unit 10 may be coupled to and/or be coupleable to the electric motor via one or more elements placed between the electric motor and the control unit 10, such as but not limited to an electric circuit for driving the electric motor on direct current and/or alternating current power sources. The control unit 10 further is arranged for coupling to a battery pack 9 of the drive train and/or to a generator 8 of the drive train. Thereto, the control unit 10 may comprises a coupler 20 coupleable to and/or a coupling to a generator 8 of the drive train and/or a coupler 21 coupleable to and/or a coupling to a battery pack 9 of the drive train. The control unit 10 further comprises a switch system 11 for connecting an electric motor 5 or at least one of the respective couplers 19 selectively with the mains connector 6, the generator 8 and/or the battery pack 9 and/or with at least one of the respective couplers 22, 20, 21. It is noted that one or more of the couplers 22, 19, 20, 21 may comprise one or multiple suitable coupling elements, such as but not limited to plugs, sockets, screw terminals and/or any conventional electric coupling elements. It is noted that the control unit 10 may additionally comprise one or more of the features described above in the context of the control unit 10 which is included in the drive train 4 being part of the mixer vehicle 1. Preferably, the control unit 10 further comprises a controller 12 for controlling the switch system 11. Further, the control unit 10 may comprise one or more sensors coupled to the controller 12 and/or couplers for coupling one or more sensors to the controller 12. It is noted that the control unit 10 can alternatively or additionally comprise one or more other components of the drive train 4. For instance, the control unit 10 may at least partly comprise an electric circuit 14 and/or a frequency charger.

The invention relates to a method for operating a mixer vehicle 1 having a mixer drum 3. The method comprises the step of connecting at least one mains connector 6 of the mixer vehicle 1 to a power mains 7. For example, the connecting may be executed by plugging in a plug of a mains connector. Alternatively or additionally, the connecting may comprise establishing a wireless energy transfer or wireless electric power connection, such an inductive coupling using conductors. Further, the method comprises feeding electric power from said power mains 7 to an electric motor 5 of the mixer vehicle 1 for driving the mixer drum 3 and driving the mixer drum 3 by means of said electric motor 5. The electric power is fed from the power mains 7 to the electric motor 5 when loading of the mixer drum 3. This can be advantageous, because the mixer drum 3 may run at relative high revolutions during loading, for instance at about 10-12 revolutions per minute, whereas the mixer drum 3 may for instance run at about 2 revolutions per 25 minute when it is moving from a loading site toward an unloading site.

For example, the mixer vehicle 1 may be provided with a detector, for instance a RFID, reader for detecting that the mixer vehicle 1 is at or near a site where a suitable power mains 7 is present and/or available. Said site and/or power mains 7 may for example be provided with a corresponding transmitter, for instance a corresponding RFID chip.

As a further example, the drive train 4, for instance by means of its controller 12, may be provided with a starting device which may prevent that, for instance when starting the electric motor 5 and/or when increasing the rotational speed of the mixer drum 3, a too high peak in power consumption occurs. As a result, it may be counteracted that a connected power mains 7 gets disabled.

Further, the drive train may comprise a housing 23 or casing arranged for sound insulating. Such a sound insulating housing may for instance accommodate parts of the drive train 4, such as but not limited to the generator engine 8a.

These and other embodiments will be apparent to the person skilled in the art and are considered to lie within the scope of the invention as formulated in the following claims.

## Claims

1. Method for operating a mixer truck (1) having a main engine (2) for driving said truck (1), and having a mixer drum (3), the method comprising the steps of:
- connecting a mains connector (6) of the mixer truck (1) to a power mains (7);
- feeding electric power from said power mains (7) directly to an electric motor (5) of the mixer truck (1) for driving the mixer drum (3); and
- driving the mixer drum (3) by means of the electric motor (5),
wherein the electric power is fed from the power mains (7) directly to the electric motor (5) when loading the mixer drum (3).

2. Method according to claim 1, wherein the mixer truck (1) comprises a main engine (2) for driving said truck (1), a mixer drum (3), and a drive train (4) for driving the mixer drum (3), wherein the drive train (4) comprises:
the electric motor (5) for driving the mixer drum (3);
the mains connector (6), said main connector (6) being for directly connecting the electric motor (5) to a power mains (7); and
a generator (8) for generating electric power comprising a generator engine (8a).

3. Method according to claim 2, wherein the drive train comprises a switch system (11) for connecting the electric motor selectively with the mains connector or the generator.

4. Method according to claim 3, wherein the switch system allows connecting the electric motor with the mains connector and the generator at the same time.

5. Method according to claim 3 or 4, wherein the drive train further comprises a controller (12) for controlling the switch system (11).

6. Method according to any one of claims 3-5, wherein the drive train comprises a sensor system (13) for sensing a power need or consumption of the electric motor and/or for sensing availability of power via the mains connector, from the generator, wherein the sensor system is connected to the controller and said controller is arranged for setting the switch system at least partly based on said detected power need or consumption and/or said detected availability of power.

7. Method according to any one of previous claims 2-6, wherein the drive train comprises an electric circuit for driving the electric motor on direct current and/or alternating current power sources.

8. Method according to any one of claims 3-7, wherein the drive train is provided with an input device (15) for inputting data concerning an intended drive state of the mixer drum, wherein the input device preferably is connected to the controller, wherein the controller is arranged for controlling the switch system at least partly based on inputted data.

## Patentansprüche

1. Verfahren zum Betreiben eines Fahrmischers (1) mit einem Hauptmotor (2) zum Antreiben des Mischers (1) und mit einer Mischertrommel (3), wobei das Verfahren die folgenden Schritte umfasst:
- Anschließen eines Netzverbinders (6) des Fahrmischers (1) an ein Stromnetz (7);
- Zuführen elektrischer Energie von dem Stromnetz (7) direkt zu einem Elektromotor (5) des Fahrmischers (1) zum Antreiben der Mischertrommel (3); und
- Antreiben der Mischertrommel (3) mittels des Elektromotors (5), wobei die elektrische Energie vom Stromnetz (7) direkt dem Elektromotor (5) zugeführt wird, wenn die Mischertrommel (3) geladen wird.

2. Verfahren nach Anspruch 1, wobei der Fahrmischer (1) einen Hauptmotor (2) zum Antreiben des Mischers (1), eine Mischertrommel (3) und einen Antriebsstrang (4) zum Antreiben der Mischertrommel (3) aufweist, wobei der Antriebsstrang (4) Folgendes umfasst:
den Elektromotor (5) zum Antreiben der Mischertrommel (3);
den Netzverbinder (6), wobei der Hauptverbinder (6) zum direkten Verbinden des Elektromotors (5) mit einem Stromnetz (7) dient; und
einen Generator (8) zum Erzeugen elektrischer Energie, der einen Generatormotor (8a) umfasst.

3. Verfahren nach Anspruch 2, wobei der Antriebsstrang ein Schaltsystem (11) zum wahlweisen Verbinden des Elektromotors mit dem Netzverbinder oder dem Generator aufweist.

4. Verfahren nach Anspruch 3, wobei das Schaltsystem das gleichzeitige Verbinden des Elektromotors mit dem Netzverbinder und dem Generator ermöglicht.

5. Verfahren nach Anspruch 3 oder 4, wobei der Antriebsstrang ferner eine Steuerung (12) zum Steuern des Schaltsystems (11) umfasst.

6. Verfahren nach einem der Ansprüche 3 bis 5, wobei der Antriebsstrang ein Sensorsystem (13) zum Erfassen eines Energiebedarfs oder -verbrauchs des Elektromotors und/oder zum Erfassen der Verfügbarkeit von Energie über den Netzverbinder vom Generator umfasst, wobei das Sensorsystem mit der Steuerung verbunden ist und die Steuerung eingerichtet ist, um das Schaltsystem zumindest teilweise basierend auf dem erfassten Energiebedarf oder -verbrauch und/oder der erfassten Verfügbarkeit von Energie einzustellen.

7. Verfahren nach einem der vorhergehenden Ansprüche 2 bis 6, wobei der Antriebsstrang eine elektrische Schaltung zum Antreiben des Elektromotors mit Gleichstrom und/oder Wechselstromleistungsquellen aufweist.

8. Verfahren nach einem der Ansprüche 3 bis 7, wobei der Antriebsstrang mit einer Eingabevorrichtung (15) zum Eingeben von Daten versehen ist, die einen vorgesehenen Antriebszustand der Mischertrommel betreffen, wobei die Eingabevorrichtung vorzugsweise mit der Steuerung verbunden ist, wobei die Steuerung zum Steuern des Schaltsystems zumindest teilweise basierend auf eingegebenen Daten eingerichtet ist.

## Revendications

1. Procédé pour faire fonctionner un véhicule mélangeur (1) qui possède un moteur principal (2) destiné à entraîner ledit véhicule (1), et qui possède un tambour de mélangeur (3), le procédé comprenant les étapes suivantes :
- le branchement d'un connecteur secteur (6) du véhicule mélangeur (1) sur une alimentation secteur (7) ;
- la fourniture d'électricité par ladite alimentation secteur (7) directement à un moteur électrique (5) du véhicule mélangeur (1) afin d'entraîner le tambour de mélangeur (3) ; et
- l'entraînement du tambour de mélangeur (3) à l'aide du moteur électrique (5),
dans lequel l'électricité est fournie par l'alimentation secteur (7) directement au moteur électrique (5) lors du chargement du tambour de mélangeur (3).

2. Procédé selon la revendication 1, dans lequel le véhicule mélangeur (1) comprend un moteur principal (2) destiné à entraîner ledit véhicule (1), un tambour de mélangeur (3), et un train d'entraînement (4) destiné à entraîner le tambour de mélangeur (3), dans lequel le train d'entraînement (4) comprend :
le moteur électrique (5) destiné à entraîner le tambour de mélangeur (3) ;
le connecteur secteur (6), ledit connecteur secteur (6) étant destiné à relier directement le moteur électrique (5) à une alimentation secteur (7) ; et
un générateur (8) destiné à générer de l'électricité, comprenant un moteur de générateur (8a).

3. Procédé selon la revendication 2, dans lequel le train d'entraînement comprend un système de commutateur (11) destiné à relier le moteur électrique sélectivement avec le connecteur secteur ou le générateur.

4. Procédé selon la revendication 3, dans lequel le système de commutateur permet de relier le moteur électrique au connecteur secteur et au générateur en même temps.

5. Procédé selon la revendication 3 ou 4, dans lequel le train d'entraînement comprend en outre un contrôleur (12) destiné à contrôler le système de commutateur (11).

6. Procédé selon l'une quelconque des revendications 3 à 5, dans lequel le train d'entraînement comprend un système de capteur (13) destiné à détecter un besoin en énergie ou une consommation d'énergie du moteur électrique et/ou à détecter la disponibilité de l'énergie via le connecteur secteur, en provenance du générateur, dans lequel le système de capteur est relié au contrôleur et ledit contrôleur est prévu pour régler le système de commutateur au moins partiellement sur la base dudit besoin en énergie ou de ladite consommation d'énergie et/ou de ladite disponibilité détectée de l'énergie.

7. Procédé selon l'une quelconque des revendications 2 à 6, dans lequel le train d'entraînement comprend un circuit électrique destiné à entraîner le moteur électrique avec des sources d'alimentation à courant continu et/ou à courant alternatif.

8. Procédé selon l'une quelconque des revendications 3 à 7, dans lequel le train d'entraînement est muni d'un dispositif d'entrée (15) destiné à fournir des données concernant un état d'entraînement prévu du tambour de mélangeur, dans lequel le dispositif d'entrée est de préférence relié au contrôleur, dans lequel le contrôleur est prévu pour contrôler le système de commutateur au moins partiellement sur la base des données fournies.
